Europäisches Patentamt

European Patent Office

Office européen des brevets

(11) Veröffentlichungsnummer: **0 191 915**
A1

## (12) EUROPÄISCHE PATENTANMELDUNG

(21) Anmeldenummer: 85115039.1

(22) Anmeldetag: 27.11.85

(51) Int. Cl.⁴: **C 08 G 18/79**
C 08 G 18/10, C 08 G 18/83
C 09 J 3/16, C 08 L 75/04
C 08 G 18/60

(30) Priorität: 26.01.85 DE 3502683

(43) Veröffentlichungstag der Anmeldung:
27.08.86 Patentblatt 86/35

(84) Benannte Vertragsstaaten:
AT CH DE FR GB IT LI NL SE

(71) Anmelder: HÜLS AKTIENGESELLSCHAFT
Patentabteilung / PB 15 - Postfach 13 20
D-4370 Marl 1(DE)

(72) Erfinder: Schmitt, Felix, Dr.
Tiroler Weg 2
D-4352 Herten(DE)

(72) Erfinder: Braunstein, Richard
Fuchspass 8
D-4270 Dorsten(DE)

(54) Polyurethane mit Urethan- und Biuretstruktur.

(57) Die Erfindung betrifft Polyurethane mit Urethan und Biuretstrukturen, erhalten durch Umsetzung von Polyurethanen aus Polyolen und 1,3-Diaza-2.4-dioxo-cyclobutanstrukturen enthaltenden Polyisocyananten mit primären und sekundären Polyaminen oder Aminooligoamiden bei Temperaturen unterhalb der Rückspalttemperatur des Uretdionrings. Bevorzugtes Polyisocyanat ist Isophorondiisocyanat.

EP 0 191 915 A1

Croydon Printing Company Ltd.

Polyurethane mit Urethan- und Biuretstruktur

Mit Polyurethanen ist es wie mit keiner anderen Gruppe der modernen Kunststoffe möglich, sich im Eigenschafts- bild und in der Anwendungstechnologie auf die geforder- ten Gebrauchseigenschaften einzustellen und sich den apparativen Verarbeitungsgegebenheiten anzupassen. Neben dem sehr weiten Spektrum der heute zur Verfügung stehenden Rohstoffe zur Polyurethanherstellung ist es vor allen Dingen die Mannigfaltigkeit der chemischen Reaktionsmöglichkeiten in der Polyurethanchemie, die dieses ermöglicht.

Bei allen bekannten Verfahren zur Herstellung von duroplastischen oder thermoplastischen PUR-Kunststoffen, einschließlich der vernetzten PUR-Lacke, geht der ent- scheidende Vernetzungsmechanismus über eine Komponen- te, die in die Vernetzungsreaktion mit freien bzw. latent blockierten Isocyanatgruppen eingreift. Dabei können die Art der chemischen Reaktion oder die Reaktionspartner sehr unterschiedlicher Natur sein.

Bekanntlich kann insbesondere bei nicht sachgemäßem Umgang mit PUR-Rohstoffen von freien Isocyanatgruppen eine gesundheitsgefährdende Wirkung ausgehen. Des weiteren sind bei der Lagerung von Isocyanatgruppen ent- haltenden Verbindungen gewisse Vorsichtsmaßnahmen zu treffen, insbesondere muß der Zutritt von Feuchtigkeit völlig ausgeschlossen werden.

Die Erfindung betrifft nun Polyurethane auf Basis aliphatischer bzw. cycloaliphatischer Diisocyanate, die nach ihrer Vernetzung zu duroplastischen oder thermoplastischen Polyurethanen für die Urethanchemie übliche Strukturen aufweisen, die jedoch nicht über freie Isocyanatgruppen reagieren.

Bekannt sind solche Produkte auf der Basis aromatischer Isocyanate mit blockierter Isocyanatgruppe, wobei z. B. phenolische Blockierungsmittel eingesetzt werden. Solche Harze lassen sich mit Aminfunktionen enthaltenden Härtern bei relativ niedrigen Temperaturen unter 50 °C vernetzen. Überträgt man diese Technologie auf aliphatische bzw. cycloaliphatische blockierte Polyisocyanate - die an sich hinsichtlich bestimmter Eigenschaften, z. B. Lichtbeständigkeit und Wetterstabilität den Aromaten überlegen sind - so erweisen sich diese bei Temperaturen < 50 °C als stabil und mit Aminen praktisch nicht vernetzbar.

Es wurde nun überraschender Weise gefunden, daß dimerisierte aliphatische und cycloaliphatische Isocyanate, sogenannte Uretdione (1.3-Diaza-2.4-dioxo-cyclobutane) und insbesondere dimerisiertes Isophorondiisocyanat (3-Isocyanato-methyl-3.5.5-trimethylcyclohexyldiisocyanat-IPDI), also N,N'-Bis(1.3.3.-trimethyl-5-isocyanatocyclohexylmethyl)-1.3-diaza-cyclobutandion-2.4 (IPDI-Uretdion) mit primären und sekundären Aminen, auch mit Aminooligoamiden bereits bei Umgebungstemperatur unter Ausbildung von Biuretstruktur reagieren, wobei der Uretdionring als solcher in die Reaktion eingeht ohne vorherige Aufspaltung des Ringes, also ohne Freiwerden der beiden NCO-Gruppen des Ringes.

Erst nach Angriff des Amins am Ring wird dieser an einer Stelle unter Ausbildung der Biuretstruktur geöffnet.

Uretdionringe werden in der Urethantechnologie bereits technisch eingesetzt, wobei allerdings die Instabilität der Verbindung bei höheren Temperaturen ausgenutzt wird, d. h., zur Vernetzungsreaktion werden die bei erhöhter Temperatur rückgespaltenen beiden Isocyanatgruppen des Ringes benutzt.

Gegenstand der Erfindung sind daher Polyurethane mit Urethan- und
Biuretstrukturen, erhalten durch Umsetzung von Polyurethanen aus
Polyolen und 1,3-Diaza-2.4-dioxo-cyclobutanstrukturen enthaltenden
Polyisocyanaten (Uretdione) mit primären und sekundären
Polyaminen, gegebenenfalls in Form ihrer Schiff'schen
Basen oder Aminooligoamiden bei Temperaturen unterhalb
der Aufspalttemperatur des Uretdionrings.
Weiterer Gegenstand ist das Verfahren zur Herstellung
dieser Polyurethane.

Besonders geeignet ist das Uretdion des Isophorondiisocyanats. Weitere geeignete Diisocyanate sind das Hexamethylendiisocyanat-1.6, das 2.2.4/2.4.4-Trimethylhexa-
methylendiisocyanat-1.6, 3-Methylpentandiisocyanat-1.5,
2-Ethylbutandiisocyanat-1.4, 4.4'-Dicyclohexylmethandiisocyanat. Als Diamine sind z. B. zu nennen Isophorondiamin, 2.2.4/2.4.4-Trimethylhexamethylendiamin-1.6,
4.4'-Diaminodicyclohexylmethan, Diethylentriamin und
Triethylentetreamin.

Geeignete Aminooligoamide sind Produkte mit einer
Molmasse von 350 - 5 000 g/Mol, vorzugsweise Produkte
mit einer Molmasse von 800 - 2 000 g/Mol, dadurch
charakterisiert, daß sie endständig praktisch keine
Carboxylgruppen aufweisen, sondern praktisch ausschließlich mit Aminfunktionen enden. Geeignete
Ausgangsprodukte für die Polykondensation zu Aminooligoamiden sind insbesondere $C_4$ bis $C_{12}$ Dicarbonsäuren, $C_4$ bis $C_{12}$ Diamine und Lactame wie z. B.
Caprolactam und Laurinlactam.

Damit ist eine chemische Struktur und eine chemische
Reaktion aufgefunden worden, die es gestattet, im
Rahmen der Urethanchemie und mit bereits im technischen
Umfang eingesetzten Polyurethanrohstoffen Polyurethane
auf aliphatischer bzw. cycloaliphatischer Isocyanat-

0191915
0.Z. 4038

Basis herzustellen, bei deren Applikation keine freien
Isocyanatgruppen auftreten und damit jegliche isocyanatbedingte, gesundheitliche Gefährdung ausgeschlossen ist.

Der technische Fortschritt gegenüber den phenolisch
blockierten, aromatischen Polyisocyanaten liegt darin,
daß durch den Einsatz von aliphatischen und cycloaliphatischen Isocyanaten mit dieser Technologie licht-
und wetterstabile Produkte hergestellt werden können.
Bekanntlich neigen aromatische Polyurethane stark zur
Vergilbung und zum chemischen Abbau.

Des weiteren verläuft die chemische Reaktion des Uretdionrings mit Aminstrukturen ohne jegliches Spaltprodukt, während bei den aromatischen Systemen Phenole
abgespalten werden mit all den bekannten Konsequenzen
(Gesundheitsgefahren, Beeinträchtigung der Endqualität des vernetzten Produktes).

Gegenüber der üblicherweise zum Aufbau von Polyurethanen
genutzten Urethanreaktion (Reaktion von Isocyanatgruppen
mit Hydroxylgruppen) liegen weitere Vorteile der erfindungsgemäßen Polyurethane besonders auf 2 Sektoren:

1. Wie bereits erwähnt, werden bei den erfindungsgemäßen Polyurethanen keine freien Isocyanatgruppen benötigt.

2. Während die Urethanreaktion bei Temperaturen
unter 20 °C nur schleppend verläuft, gewährleistet die erfindungsgemäße Vernetzungsreaktion auch bei tieferen Temperaturen eine
ordnungsgemäße Durchhärtung. Dieses gestattet
die Applikation dieser Urethanharze auch bei
Temperaturen deutlich unter 20 °C.

Die Anwendungsbereiche der nach der vorliegenden Erfindung aufgebauten Polyurethane liegen auf dem Sektor der Dichtungs- und Fugenmassen sowie bei den Klebstoffen. Dabei ist in erster Linie die industrielle Applikation zu sehen, da optimale Ergebnisse am leichtesten beim Einsatz von Zweikomponenten-Anlagen zu erzielen sind.

Da insbesondere bei der Applikation von Lacken der Kontakt mit isocyanatgruppen-enthaltenden Spritznebeln nur schwer auszuschließen ist, eröffnet diese Technologie die Möglichkeit, gefahrloser PUR-Lacke zu verarbeiten. Aus diesem Grund eröffnet der Lacksektor ein breites Anwendungsfeld.

Sehr interessante Anwendungen liegen auch auf dem Epoxidharzsektor. Epoxidharze, sofern sie bei Umgebungstemperatur verwendet werden, vernetzen üblicherweise mit Aminen und Aminformulierungen, den sogenannten Härtern. Die erfindungsgemäßen PUR-Harze gestatten die Flexibilisierung von Epoxid ohne Einbußen in der Härtungsgeschwindigkeit und helfen des weiteren, die grundsätzliche Schwäche der EP-Systeme bei der Niedrigtemperaturhärtung zu überwinden. Dies ist einfach dadurch möglich, daß dem Epoxidharz ein gewisser Anteil PUR-Harz zugesetzt wird und die Menge des aminischen Härters auf eine solche Formulierung abgestimmt wird.

Beispiele

Ausgangsprodukt: Dimeres Isophorondiisocyanat, Uretdion

Die Dimerisierung von Isophorondiisocyanat (3-Isocyanato-methyl-3.5.5 trimethyl cyclohexylisocyanat) wird in an sich bekannter Weise durchgeführt.

Dazu werden 1 000 g Isophorondiisocyanat mit einem Isocyanatgehalt von 37,8 % mit 20 g Tris-(dimethyl-amino)-phosphin intensiv gemischt und bei Umgebungstemperatur (ca. 20 °C) für 10 h sich selbst überlassen. Nach dieser Zeit ergibt die Analyse des NCO-Gehaltes eine Isocyanat-Konzentration von 31,0 %. Der Ansatz wird nunmehr in einer Labor-Dünnschichtanlage aufgearbeitet, d. h. das Dimere vom nicht umgesetzten Ausgangsprodukt, dem monomeren IPDI, befreit. Dieses geschieht bei 140 °C im Vakuum von 0,1 Torr.

Das abgetrennte dimerisierte IPDI weist einen freien Isocyanatgehalt von 17,3 % auf. Die thermische Rückspaltung bei 180 °C über 30 min ergibt einen Wert von 37,0 % NCO. Nach diesen Werten besteht das so gewonnene Oligomere aus mehr als 95 % Dimer-(Uretdion-)-strukturen.

Allgemeine Herstellungsbeschreibung für die Beispiele 1 - 6

A Gewichtsteile des Polyols werden mit B Gewichtsteilen des dimeren Isophorondiisocyanates in einem Doppel-Z-Kneter bei ca. 85 °C unter Zusatz von 0,1 Gewichts-% DBTL als Katalysator zur Umsetzung gebracht. Die Reaktionszeiten liegen bei 2 - 3 Stunden. Nach Erreichen einer NCO-Zahl (Isocyanatgehalt), die zwischen 5 und 20 % unter der rechnerisch ermittelten Isocyanatzahl liegt, werden C-Gewichtsteile 2-Ethylhexanol entsprechend der praktisch ermittelten Isocyanatzahl zugesetzt. Nach einer Reaktionszeit von 3 h bei 85 °C wird das Produkt mit Hilfe einer Austragsschnecke aus dem Kneter gefahren.

Beispiel 1

1 110 g (A Gewichtsteile) eines hydroxylgruppenhaltigen Polyesters mit einer OH-Zahl von 105 mg KOH/g, bestehend aus Adipinsäure, Hexandiol-1.6 und Neopentylglykol im Molverhältnis 4:2:3, werden mit 754 g Uretdion (B Gewichtsteile) und 135 g 2-Ethylhexanol (C Gewichtsteile) nach oben beschriebenem Verfahren zu einem Polyurethanharz umgesetzt.
Der verbleibende NCO-Gehalt liegt bei 0,3 %.

Das so hergestellte Harz wird mit einem Lösemittelgemisch von Butylacetat, Ethylacetat, Toluol im Gewichtsverhältnis 1:1:1 zu einer 30 %igen Lösung aufgenommen.

100 g dieser Lösung werden mit 2,35 g Isophorondiamin (3-Aminomethyl-3.5.5 trimethyl cyclohexylamin) gemischt und mit Hilfe eines Rakels auf eine Glasscheibe, die mit Trennmittel vorbehandelt ist, appliziert.

Bei der Ermittlung der mechanischen Daten der über 7 Tage im Normklima getrockneten Folie ergeben sich:

| | |
|---|---|
| Shore Härte: | A 85/D 48 |
| Zugversuch nach | DIN 53 504 |
| Zugfestigkeit: | 40 N/mm$^2$ |
| Bruchdehnung: | 280 % |

Setzt man dem in diesem Beispiel beschriebenen PUR-System 10 Gew.-%, bezogen auf eingesetzte Bindemittel, Butylbenzylphthalat zu, ergeben sich bei der Ausprüfung der gehärteten Folie die folgenden Daten:

| | |
|---|---|
| Shore-Härte: | A 75 |
| Zugversuch nach | DIN 53 504 |
| Zugfestigkeit: | 30 N/mm$^2$ |
| Bruchdehnung: | 300 % |

Beispiel 2

1 400 g (A Gewichtsteile) eines Polycaprolactons mit einer Molmasse von 2 000 g/Mol und einer Hydroxylzahl von 56 mg KOH/g werden mit 508 g Uretdion (B Gewichtsteile) und 91 g 2-Ethylhexanol (C Ge-wichtsteile) entsprechend der allgemeinen Herstel-lungsvorschrift zu einem Polyurethanharz umgesetzt. Nach Austrag des Produktes liegt der NCO-Gehalt < 0,05 %.

Wie in Beispiel 1 beschrieben, wird eine Folie hergestellt, wobei 100 g einer 30 %igen Lösung mit 1,58 g Isophorondiamin zu einem 2-komponentigen Material formuliert wurde. Nach der Trocknung bei 23 °C über 7 Tage weist das ausreagierte PUR-Material die folgen-den mechanischen Daten auf:

| | |
|---|---|
| Shore Härte: | A 54 |
| Aus Zugversuch nach | DIN 53 504 |
| Zugfestigkeit: | 40 N/mm$^2$ |
| Bruchdehnung: | 400 % |

Beispiel 3

1 390 g (A Gewichtsteile) eines Polytetrahydrofuran-Polyethers mit einer Molmasse von ca. 2 000 g/Mol und einer OH-Zahl von 58 mg KOH/g werden mit 520 g Uretdion (B Gewichtsteile) und 93 g 2-Ethylhexanol (C Gewichtsteile) in der beschriebenen Weise zu einem Polyurethanharz umgesetzt. Das Endprodukt weist einen NCO-Gehalt von 0,2 % auf.

Zur Herstellung einer PUR-Klarfilmfolie werden 100 g einer 30 %igen Lösung des Harzes in Butylacetat/Ethylacetat/Toluol mit 1,62 g IPD gemischt und nach 7tägiger Trocknung und Härtung einer Abprüfung mechanischer Daten unterworfen.

| | |
|---|---|
| Shore Härte: | A 61 |
| Aus Zugversuch nach | DIN 53 504 |
| Zugfestigkeit: | 27 N/mm$^2$ |
| Bruchdehnung: | 360 % |

Beispiel 4

930 g des in Beispiel 1 beschriebenen Polyesters (A Gewichtsteile) werden mit 843 g Uretdion (B Gewichtsteile) und 227 g 2-Ethylhexanol (C Gewichtsteile) in beschriebener Weise zu einem PUR-Harz umgesetzt.

100 g einer 30 %igen Lösung dieses Harzes werden mit 2,62 g IPD (Isophorondiamin) zu einem 2-komponentigen PUR-System formuliert und in bereits beschriebener Weise appliziert.

Mechanische Eigenschaften der Folie:

| | |
|---|---|
| Shore Härte: | A 93/D 60 |
| Aus Zugversuch nach | DIN 53 504 |
| Zugfestigkeit bei | |
| 50 % Dehnung: | 12,0 N/mm$^2$ |
| 100 % Dehnung: | 13,5 N/mm$^2$ |
| beim Bruch: | 30,0 N/mm$^2$ |
| Bruchdehnung: | 260 % |

Beispiel 5

1 240 g (A Gewichtsteile) Polypropylenoxid-polyether
mit einer Molmasse von 2 000 g/Mol und einer OH-Zahl
von 58 mg KOH/g werden mit 600 g dimerem Isophorondiisocyanat (B Gewichtsteile) und 160 g 2-Ethylhexanol
(C Gewichtsteile) bei 85 °C in beschriebener Weise
zu einem PUR-Harz synthetisiert. Die NCO-Zahl des
Harzes beträgt 0,2 % NCO.

Zur Prüfung der mechanischen Daten eines mit Isophorondiamin (IPD) gehärteten Polyurethans werden 100 g
einer 30 %igen Lösung (s. o.) dieses Harzes mit 1,86 g
IPD gemischt und in beschriebener Weise eine transparente Folie hergestellt.
Mechanisches Eigenschaftsbild:

         Shore Härte:        A 40
         Aus   Zugversuch nach DIN 53 504
         Bruchspannung:      14 N/mm$^2$
         Bruchdehnung:       450 %

Beispiel 6

Die in Beispiel 1 beschriebene 30 %ige PUR-Harz-Lösung
wird  mit einer Härterkombination, bestehend aus einem
Aminooligoamid und dem Trimethylhexandiamin-1.6, gemischt. Aus dieser 2-komponentigen PUR-Mischung wird
in beschriebener Weise eine transparente Folie hergestellt.

Formulierung:

PUR-Harz-Lösung, gemäß Beispiel 1:          95,4 %
Oligoamid, Äquivalentgewicht: 640 g/Val.:    2,8 %
2.2.4/2.4.4-Trimethylhexandiamin-1.6:        1,8 %

Bei der Ermittlung der mechanischen Daten der über
7 Tage im Normklima getrockneten Folie ergaben sich:

| | |
|---|---|
| Shore Härte: | 85 A/41 D |
| Zugversuch nach | DIN 53 504 |
| Zugfestigkeit: | 36 N/mm$^2$ |
| Bruchdehnung: | 330 % |

Das Oligoamid besteht aus Laurinlactam, Dodecandicarbonsäure und Isophorondiamin im Molverhältnis 2:4:4, wobei
zur Regelung der Molmasse ein Überschuß von ca. 20 %
Isophorondiamin eingesetzt wird.

PU/Epoxy-Kombination

Beispiel 7

Ausgehend von dem in Beispiel 5 beschriebenen PUR-Harz
wurde eine transparente Masse gemäß der folgenden Formulierung hergestellt:

| | |
|---|---|
| PUR-Harze (Polypropylenglykolether/ Uretdion, 2-Ethylhexanol): | 40,4 % |
| Epoxidharz auf der Basis von Bis-phenol A: | 40,4 % |
| Epoxid-Äquivalentgewicht: 190 g/val | |
| 2.2.4/2.4.4-Trimethylhexan- diamin-1.6: | 10,8 % |
| Benzylalkohol: | 7,4 % |
| Salicylsäure: | 1,0 % |

Aus den drei letztgenannten Produkten wird vorab eine
Härterformulierung (Komponente B) hergestellt, die dann
mit der Komponente A, bestehend aus Epoxidharz und
PUR-Harz, intensiv im o. g. Verhältnis gemischt wird.
Die Verarbeitungszeit beträgt 20 min.

Ein Teil der Masse wird in einer vorbereiteten Form zu einer 5 mm starken Platte vergossen, ein anderer Teil wird unmittelbar nach dem Mischen mit Butylacetat/Ethylacetat/Toluol (1:1:1) zu einer 50 %igen Lösung aufgenommen und wie schon in den vorgängigen Beispielen als Folienmaterial appliziert.

Härtungsverlauf der lösemittelfreien Beschichtungsmasse

|  | Härtung bei 23 °C | | | | | | |
|---|---|---|---|---|---|---|---|
|  | 1 d | 2 d | 3 d | 4 d | 5 d | 6 d | 7 d |
| Shore Härte | 33 D | 43 D | 50 D | 56 D | 58 D | 60 D | 59 D |

Die Abprüfung der mechanischen Daten der Folie ergab nach 7tägiger Härtung im Normklima durch Auswertung des Zugversuches nach DIN 53 504 eine Zugfestigkeit von 19 N/mm$^2$ und eine Bruchdehnung von 60 %.

Beispiel 8

In sonst völlig analoger Weise zu der in Beispiel 7 beschriebenen Herstellung von lösemittelfreien Beschichtungen und Lackfolien wird in diesem Beispiel ebenfalls ein Epoxidharz des Bis-phenol-A-Typs eingesetzt, das im Verhältnis 85:15 mit einem Reaktivverdünner, einem $C_{12}$-$C_{14}$-aliphatischen Glycidyläther, abgemischt wird. Das EP-Äquivalentgewicht liegt bei 200 g/val. Die Verarbeitungszeit beträgt 50 min.

Formulierung:

| | |
|---|---|
| PUR-Harz, gemäß | |
| Beispiel 5: | 40,8 % |
| EP-Harz, s. o.: | 40,8 % |
| 2.2.4/2.4.4-Trimethyl- | |
| hexandiamin-1.6: | 10,4 % |
| Benzylalkohol: | 7,1 % |
| Salicylsäure: | 0,9 % |

Härtungsverlauf der lösemittelfreien Beschichtung

| | Härtung bei 23 °C | | | | | | |
|---|---|---|---|---|---|---|---|
| | 1 d | 2 d | 3 d | 4 d | 5 d | 6 d | 7 d |
| Shore Härte | 15 D | 23 D | 25 D | 25 D | 27 D | 30 D | 29 D |

Bei der Vermessung der Folie nach DIN 53 504 wird ermittelt:

| | |
|---|---|
| Zugfestigkeit: | 17 $N/mm^2$ |
| Bruchdehnung: | 120 % |

Beispiel 9

Nach dem in Beispiel 7 beschriebenen Verfahren wird nach der folgenden Rezeptur eine EP/PU-Masse formuliert, appliziert und ausgeprüft. Die Verarbeitungszeit beträgt 20 min.

Formulierung:

| | |
|---|---|
| PU-Harz, gemäß Beispiel 1: | 40,5 % |
| mod. EP-Harz, gemäß Beispiel 8: | 40,5 % |
| 2.2.4/2.4.4-Trimethylhexan-diamin-1.6: | 11,0 % |
| Benzylalkohol: | 7,0 % |
| Salicylsäure: | 1,0 % |

Härtungsverlauf der lösemittelfreien Beschichtungen

| | Härtung bei 23 °C | | | | | | |
|---|---|---|---|---|---|---|---|
| | 1 d | 2 d | 3 d | 4 d | 5 d | 6 d | 7 d |
| Shore Härte | 70 A | 33 D | - | - | 39 D | 40 D | 44 D |

Bei der Vermessung der Folie nach DIN 53 504 wurde ermittelt:

| | |
|---|---|
| Zugspannung: | 24 N/mm$^2$ |
| Bruchdehnung: | 135 % |

Beispiel 10

Mit den im Beispiel 9 beschriebenen PUR- und EP-Harzen wird unter Verwendung von 3.3'-Dimethyl-4.4'-diamino-dicyclohexyl-methan als Vernetzer nach der folgenden Rezeptur eine EP/PU-Masse formuliert, appliziert und ausgeprüft:

PU-Harz, gemäß

Beispiel 1:                           37,0

mod. EP-Harz,

gemäß Beispiel 8:                     37,0

3.3'-Dimethyl-4.4'-diamino-

dicyclohexyl-methan:                  15,0

Benzylalkohol:                         9,7

Salicylsäure:                          1,3


Härtungsverlauf der lösemittelfreien Beschichtung:

| | Härtung bei 23 °C | | | | | | |
|---|---|---|---|---|---|---|---|
| | 1 d | 2 d | 3 d | 4 d | 5 d | 6 d | 7 d |
| Shore Härte | 23 D | 47 D | 53 D | 57 D | - | - | 61 D |


Bei der Vermessung der Folie nach DIN 53 504 wird ermittelt:

Zugfestigkeit:                        19 N/mm$^2$

Bruchdehnung:                         22 %


Unterwirft man die Folie zur Vervollständigung der chemischen Reaktion einer Wärmelagerung bei 150 °C über 3 h, so wird im Zugversuch nach DIN 53 504 ermittelt:

Zugfestigkeit:                        44 N/mm$^2$

Bruchdehnung:                         20 %


Beispiel 11

Herstellungsbeschreibung eines Epoxidgruppen enthaltenden PUR-Harzes 505 g eines Polypropylenoxid-polyethers mit einer Molmasse von 2 000 g/Mol und einer OH-Zahl von 56 mg KOH/g
werden mit 244 g des dimeren Isophorondiisocyanates
(Uretdion) unter Zusatz von 0,1 Gewichts-% DBTL als
Katalysator in einem Rührgefäß bei 85 °C zur Reaktion
gebracht. Diese Reaktion wird in Lösemitteln durchgeführt. Dazu wird ein Gemisch von Ethylacetat, Butylacetat und Toluol im Verhältnis 1:1:1 eingesetzt. Die
Harzkonzentration beträgt 50 Gewichts-%. Nach einer
Reaktionszeit von 3 h liegt die praktische NCO-Zahl
bei 1,3 %.

Entsprechend dieses NCO-Gehaltes werden im stöchiometrischen Verhältnis 34 g 2.3-Epoxipropanol zugesetzt. Nach einer Reaktionszeit von 3 h bei 75 °C
wird das fertige Produkt zur Weiterverarbeitung abgefüllt. Der NCO-Gehalt beträgt 0,2 % NCO.

Zur Ausprüfung des mechanischen Eigenschaftsbildes
werden Folien der folgenden Formulierung hergestellt
und vermessen:

| Formulierung | I | II | III | IV |
|---|---|---|---|---|
| | in Gewichts-% | | | |
| PUR-EP-Harz-Lösung (s. o.) | 92,6 | 91,6 | 90,0 | 89,4 |
| Isophorondiamin (IPD) | - | 8,4 | - | 8,2 |
| 2.2.4/2.4.4-Trimethyl-hexandiamin-1.6 | 7,8 | - | 7,7 | - |
| Benzylalkohol | - | - | 2,0 | 2,1 |
| Salicylsäure | - | - | 0,3 | 0,3 |

mechanische Eigenschaften der Folien:

| Formulierung | Shore Härte | Zugversuch nach DIN 53 504 | |
| | | Bruchspannung | Bruchdehnung |
| --- | --- | --- | --- |
| I | 86 A/40 D | 11 N/mm$^2$ | 160 % |
| II | 89 A/43 D | 13 N/mm$^2$ | 170 % |
| III | 86 A/39 D | 11 N/mm$^2$ | 160 % |
| IV | 89 A/43 D | 15 N/mm$^2$ | 200 % |

Beispiel 12

2K-PUR-Lack

Das im Beispiel 1 beschriebene PUR-Harz wird in Butylacetat/Xylol (1:1) zu einer 50 %igen Lösung gelöst. Diese Lösung wird in üblicher Weise mit TiO$_2$-Rutil-Typ entsprechend einer PVK von 17 pigmentiert und mit Isophorondiamin bzw. 2:2.4-2.4.4-Trimethylhexandiamin-1.6 gemäß den unten beschriebenen Rezepturen zu 2K-PUR-Lacken formuliert.

| Komponenten | Rezeptur I | Rezeptur II |
| --- | --- | --- |
| PUR-Harz, Beispiel 1 | 35,4 % | 35,5 % |
| n-Butylacetat | 17,7 % | 17,7 % |
| Xylol | 17,7 % | 17,7 % |
| TiO$_2$, Rutil, Weißpigment | 26,4 % | 26,5 % |
| Isophorondiamin | 2,8 % | - |
| Trimethylhexandiamin | - | 2,6 % |

Mit Hilfe eines Rakels werden 1 mm Stahlbleche beschichtet und unter verschiedenen Härtungsbedingungen ausgehärtet. In den folgenden Tabellen sind wesentliche Verarbeitungsdaten sowie wichtige lacktechnische Größen zu-sammengestellt.

2K-PUR-Lack, gemäß Rezeptur I

| Härtung | Staubtr.-zeit | Schicht-stärke | Verarbei-tungszeit | Lacktechnische Daten | | | | | | | | |
|---|---|---|---|---|---|---|---|---|---|---|---|---|
| | | | | GS | HB | ET | PH 1d | PH 4d | PH 7d | KS | GG 20° | GG 60° |
| Normklima | 75 min | 35-40 µm | 7 h 30 min | 1 | 63 | 11,9 | 24 | 34 | 37 | >80 | 55 | 89 |
| 30', 60 °C | – | 35-37 µm | – | 2 | 63 | 13,4 | 21 | 31 | 35 | >80 | 63 | 88 |
| 30', 80 °C | – | 35-38 µm | – | 0 | 67 | 13,7 | 21 | 29 | 31 | >80 | 67 | 89 |

2K-PUR-Lack, gemäß Rezeptur II

| Härtung | Staubtr.-zeit | Schicht-stärke | Verarbei-tungszeit | Lacktechnische Daten | | | | | | | | |
|---|---|---|---|---|---|---|---|---|---|---|---|---|
| | | | | GS | HB | ET | PH 1d | PH 4d | PH 7d | KS | GG 20° | GG 60° |
| Normklima | 30 min | 40-50 µm | 30 min | 2 | 67 | 13,6 | 25 | 29 | 29 | >80 | 75 | 83 |
| 30', 60 °C | – | 30-35 µm | – | 2 | 67 | 13,8 | 26 | 30 | 30 | >80 | 76 | 83 |
| 30', 80 °C | – | 35 µm | – | 1-2 | 63 | 12,7 | 26 | 29 | 29 | >80 | 73 | 85 |

GS: Gitterschnitt, nach DIN 53 151

HB: Eindruckhärte, nach DIN 53 153

ET: Erichsentiefung, nach DIN 53 156

PH: Pendelhärte, nach DIN 53 157

KS: Kugelschlag

GG: Glanz Gardner, nach ASTM D-523

0191915
O.Z. 4038

Beispiel 13

2-Komponenten-PUR-Lack

Harzherstellung

In einer Laborglasrührapparatur werden 324 g eines trifunktionellen Polycaprolactons mit einer OH-Zahl von 310 mg KOH/g mit 865 g dimerem Isophorondiisocyanat in Anwesenheit von 510 g eines Lösemittelgemisches, bestehend aus n-Butylacetat und einer $C_9/C_{10}$-Aromatenmischung, bei ca. 80 °C zur Reaktion gebracht. Die Reaktion wird mit 0,2 g DBTL katalysiert. Nach 2 h ist ein NCO-Gehalt von 4,45 % erreicht. Es werden nun 235 g 2-Ethylhexanol gemeinsam mit 100 g des o. g. Lösemittelgemisches zugefügt und die Reaktionsmischung weitere 3 h auf ca. 80 °C gehalten. Der NCO-Gehalt liegt dann bei 0,4 %.

Lackformulierungen

Entsprechend den beiden folgenden Rezepturen werden drei transparente PUR-Lacke formuliert, auf einem 1 mm starken, phosphatierten Stahlblech appliziert und einer Aushärtung im Normklima unterworfen.

Neben dem Einsatz von 2 Polyaminen mit freien Amingruppen wird in der Rezeptur III ein blockiertes Amin, eine Schiff'sche Base, eingesetzt, die durch Kondensation von 1 Mol Isophorondiamin mit 2 Mol iso-Butylaldehyd hergestellt wird.

Zusammensetzung der Lacke

| Komponenten | Rezeptur I | Rezeptur II | Rezeptur III |
|---|---|---|---|
| PUR-Harz s. o. (70 %ig) | 64,1 % | 64,3 % | 64,6 % |
| BAYSILON OL (10 %ig) (Verlaufsmittel) | 0,5 % | 0,5 % | 0,5 % |
| BYKETOL® spezial (Verlaufsmittel) | 0,5 % | 0,5 % | 0,5 % |
| Butylacetat | 14,6 % | 14,7 % | 12,5 % |
| $C_9/C_{10}$-Aromatengemisch | 14,6 % | 14,7 % | 12,5 % |
| Isophorondiamin | 5,7 % | - | - |
| 2.2.4/2.4.4-Trimethylhexamethylendiamin | - | 5,3 % | - |
| Schiffsche Base des Isophorondiamins s. o. | - | - | 9,4 % |

Lacktechnische Daten der Rezepturen I, II und III bei Aushärtung im Normklima

| | Staubtr.-zeit | Schicht-stärke | Verarbei-tungszeit | Lacktechn. Daten | | | | PH 4d | PH 7d |
|---|---|---|---|---|---|---|---|---|---|
| | | | | GS | HB | ET | PH 1d | | |
| Rezeptur I | 30 min. | 40 μm | 80 min. | 0 | 118 | 5,0 | 87 | 141 | 154 |
| Rezeptur II | 17 min. | 35 μm | 5 min. | 0 | 125 | 6,0 | 124 | 168 | 172 |
| Rezeptur III | 75 min. | 30 μm | > 7 d | 0 | 63 | 9,0 | 35 | 62 | 90 [+] |

GS: Gitterschnitt, nach DIN 53 151

HB: Eindruckhärte, nach DIN 53 153

ET: Erichsentiefung, nach DIN 53 156

PH: Pendelhärte, nach DIN 53 157

+) Durchhärtung nach 7 d nicht abgeschlossen

Patentansprüche:

1. Polyurethane mit Urethan und Biuretstrukturen, erhalten durch Umsetzung von Polyurethanen aus Polyolen und 1,3-Diaza-2.4-dioxo-cyclobutanstrukturen enthaltenden Polyisocyanaten mit primären und sekundären Polyaminen oder Aminooligoamiden bei Temperaturen unterhalb der Rückspalttemperatur des Uretdionrings.

2. Polyurethane nach Anspruch 1,
   dadurch gekennzeichnet,
   daß das 1,3-Diaza-2.4-dioxo-cyclobutanstrukturen enthaltende Polyisocyanat das Uretdion des Isophorondiisocyanats ist.

3. Polyurethane nach Anspruch 1,
   dadurch gekennzeichnet,
   daß das Polyamin das Isophorondiamin ist.

4. Polyurethane nach den Ansprüchen 1 und 3,
   dadurch gekennzeichnet,
   daß die Polyamine in Form ihrer Schiff'schen Base eingesetzt werden.

5. Verfahren zur Herstellung von Polyurethanen mit Urethan- und Biuretstruktur,
   dadurch gekennzeichnet,
   daß Polyurethane aus Polyolen und 1,3-Diaza-2.4-dioxo-cyclobutanstrukturen enthaltenden Polyisocyanaten mit primären und sekundären Polyaminen, gegebenenfalls in Form ihrer Schiff'schen Basen, oder Aminooligoamiden bei Temperaturen unterhalb der Rückspalttemperatur des Uretdionrings unter Bildung von Biuretstrukturen umgesetzt werden.

6. Verfahren nach Anspruch 1,
   dadurch gekennzeichnet,
   das das 1,3-Diaza-2.4-dioxo-cyclobutanstrukturen enthaltende Polyisocyanat das Uretdion des Isophorondiisocyanats ist.

7. Verfahren nach Anspruch 1,
   dadurch gekennzeichnet,
   daß das Polyamin Isophorondiamin ist.

EUROPÄISCHES PATENTAMT

Europäisches Patentamt

**EUROPÄISCHER RECHERCHENBERICHT**

0191915

Nummer der Anmeldung

EP 85 11 5039

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 998 794 (H.J. MÜLLER et al.)<br>* Ansprüche 1,3,6; Spalte 3, Zeile 59 - Spalte 5, Zeile 9; Spalte 5, Zeilen 24-34; Spalte 6, Zeilen 19-25 *<br><br>--- | 1-3,5-7 | C 08 G 18/79<br>C 08 G 18/10<br>C 08 G 18/83<br>C 09 J 3/16<br>C 08 L 75/04<br>C 08 G 18/60 //<br>(C 08 L 75/04<br>C 08 L 63:00 ) |
| X | GB-A-1 353 413 (BAYER)<br><br>* Ansprüche 1,3,11-13,17-18; Seite 2, Zeilen 50-57; Seite 3, Zeilen 20-31; Seite 4, Zeilen 33-45; Seite 6, Zeilen 12-61; Seite 8, Zeilen 24-27; Seite 10, Zeilen 22-37; Seite 11, Zeilen 9-34 *<br><br>--- | 1,3,5,7 | |
| X | DE-A-2 538 484 (VEBA-CHEMIE)<br><br>* Anspruch; Seite 3, Absatz 2 - Seite 4, Absatz 2 *<br><br>--- | 1-3,5-7 | **RECHERCHIERTE SACHGEBIETE (Int. Cl.4)**<br><br>C 08 G |
| X | FR-A-1 471 610 (BAYER)<br>* Zusammenfassung, Punkt I; Seite 2, rechte Spalte, Absatz 2; Seite 3, linke Spalte, Absätze 2,3 *<br><br>--- | 1,5 | |
| X | FR-A-1 155 214 (BAYER)<br>* Zusammenfassung, Punkt A; Seite 2, linke Spalte, Absatz 4 *<br><br>--- -/- | 1,5 | |

Der vorliegende Recherchenbericht wurde für alle Patentansprüche erstellt.

| Recherchenort | Abschlußdatum der Recherche | Prüfer |
|---|---|---|
| DEN HAAG | 29-05-1986 | VAN PUYMBROECK M.A. |

Europäisches Patentamt

**EUROPÄISCHER RECHERCHENBERICHT**

0191915

Nummer der Anmeldung

EP 85 11 5039

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 137 276 (J. SIROTA) <br> * Ansprüche 1,3 * <br><br> ----- | 1,4 | |

**RECHERCHIERTE SACHGEBIETE (Int. Cl.4)**

Der vorliegende Recherchenbericht wurde für alle Patentansprüche erstellt.

| Recherchenort <br> DEN HAAG | Abschlußdatum der Recherche <br> 29-05-1986 | Prüfer <br> VAN PUYMBROECK M.A. |
|---|---|---|